# EUROPEAN PATENT APPLICATION

(11) **EP 0 627 862 A2**
(43) Date of publication of application: **07.12.1994**
(21) Application number: 94303694.7
(22) Date of filing: 24.05.1994
(51) Int. Cl.: H04Q 3/62

(54) **Virtual private networks**

(30) Priority: 02.06.1993 GB 9311367
(71) Applicant: GPT LIMITED, Coventry, CV3 1HJ (GB)
(72) Inventor: Williams, Philip John, Brislington, Bristol BS4 5AN (GB)
(74) Representative: Branfield, Henry Anthony

(57) **Abstract**

A telecommunications network service has a number used to route a call through the network which includes means of identifying a call-related message passed over a separate unrelated message path.

An Intelligent Network Architecture as above may be used with a telecommunications system including a Virtual Private Network (VPN), the VPN comprising a plurality of Private Branch Exchanges (PBX), each PBX having a connection to a public telephone network and to an Intelligent Network (I.N.) within the system wherein, when a VPN call is initiated by a user connected to a PBX the PBX sends a message via the I.N. to the destination PBX, also a connection is made between the PBX and the local exchange and a message is sent from the local exchange via the I.N. to a VPN Service Point, whereupon the Service Point establishes a connection, via the I.N. between the user local exchange and the destination PBX.

## Description

In co-pending Application No. GB 2272603A entitled "Intelligent Network Architecture" imported herein by reference, is described an Intelligent Network (IN) architecture having separated service control and bearer (call) control, the service control information being conveyed by a separate message network.

By providing access to the message network from Private Branch Exchanges (PBX) and by providing an appropriate IN service as herein described, the architecture described in the above application enables the provision of Virtual Private Networks (VPN) without further alternation of public network equipment.

VPN calls are processed by an IN service in order to separate the VPN traffic from the public network traffic for charging and call-logging purposes. Otherwise the function of the IN VPN-service is very simple.

This proposition concentrates upon the provision of ordinary speech connections between remote PBX extensions; the IN architecture employed provides access via the public network to other IN services that may be of value to VPN's.

An organisation with PBX's at several sites may form a private network by interconnecting the PBX's and handling inter-PBX traffic without using the public network. By including the ability to transmit messages over the private network, the networking of sophisticated PBX call-handling facilities is enabled. The private network numbering scheme typically has a 3-digit site identifier and 4-digit extension number.

A VPN provides identical services to a physical private network by establishing inter-PBX call connections on demand via the public network, thereby totally eliminating the need for dedicated circuits interconnecting the PBX's.

According to the present invention there is provided a telecommunications network service in which the number used to route a call through the network includes means of identifying a call-related message passed over a separate unrelated message path.

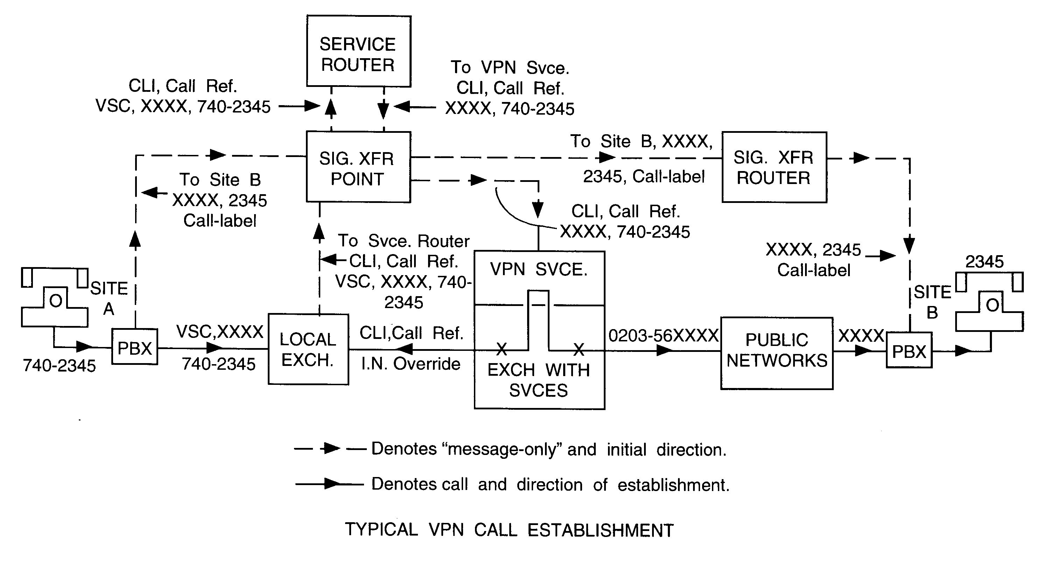

The present invention will now be described by way of example, with reference to the accompanying single figure, in which is shown the establishment of a typical VPN call.

The telecommunications system includes a Virtual Private Network (VPN), the VPN comprising a plurality of Private Branch Exchanges (PBX), each PBX having a connection to a public telephone network and to an Intelligent Network (I.N.) within the system wherein, when a VPN call is initiated by a user connected to a PBX, the PBX sends a message via the I.N. to the destination PBX, also a connection is made between the PBX and the local exchange and a message is sent from the local exchange via the I.N. to a VPN Service Point, whereupon the Service Point establishes a connection, via the public telephone network, between the user local exchange and the destination PBX.

According to this proposition, VPN calls through the public network are directed to reserved numbers of the Direct Dialling In (DDI) facility at the destination PBX. The DDI number received from the public network on a VPN call is used by the destination PBX to recognise the VPN service and to identify a similarly numbered message from the originating PBX delivered by the message network.

The message contains the called extension number and any special handling requirements. A call-label is included for any subsequent message exchange, thereby enabling re-use of the DDI number as soon as the connection is established.

In order that the same reserved DDI numbers are not used by different PBX's within the VPN group, it is necessary to allocate a discrete group of numbers to each PBX or other remote calling device. In view of the short holding time of the numbers, a group of ten numbers per PBX would be more than sufficient for most applications.

A PBX extension at Site A dials a VPN call (740-2345).

The PBX will extend the call to the local exchange prefixing the dialled digits with the VPN-service code (VSC) and a message-identifier (XXXX) to be forwarded to the destination PBX (Site B) as a DDI number. The PBX will also send a message to the destination PBX via the IN message network containing the same message-identifier, the called extension number, any special handling requirements and a call-label for use with subsequent messages relating to this call.

The call to the local exchange will become connected to an IN VPN-service terminal in the following manner. (i.e. the manner employed to connect any caller to any IN service using the proposed IN architecture.)

The local exchange will forward the VPN-service request, message-identifier and dialled digits to the local IN Service Router together with the Calling Line Identity (CLI) and a call reference identifying the actual call instance in the local exchange.

The Service Router is a node of the IN message network. It re-addresses and forwards the message to the VPN-service, which will appoint a terminal to handle the call.

The VPN-service terminal will pick-up the connection from the calling PBX through the public network using the CLI, the call reference and the I.N. override facility (which instructs the local exchange to connect to the busy line.)

The CLI will enable the VPN-service to identify the VPN; the dialled number will indicate the destination PBX. The VPN-service will extend the call through the public network to the destination PBX's DDI number using the message-identifier to complete the DDI number (0203-56XXXX). The destination public exchange will forward the message-identifier to the destination PBX in the normal DDI manner.

The DDI number received from the public network will cause the destination PBX to recognise the VPN service and search for a similarly numbered message being passed over the I.N. message network from the originating PBX. The message will contain the called extension number, any special handling requirements and a call-label for use with any subsequent messages via the message network.

The originating PBX will not re-use the message-identifier until the current call-set-up is completed. Identifying that the set-up is complete presents no problems in completely digital networks. Elsewhere, it will need to await some later event, be subject to time-out, or be the subject of a message returned by the destination PBX via the I.N. message network.

Calls which are abandoned during set-up, or which fail due to congestion or other problems, will also require special action to release the message-identifier.

The IN architecture employed enables access to IN services from analogue exchange terminals but the method would use an artificial CLI. In such cases the IN VPN-service will need to use the dialled digits to identify the caller's VPN.

Extending the IN message network to PBX's might be achieved by digital or analogue means, dependent upon local conditions. PBX's in analogue areas would require the provision of a private wire and suitable analogue signalling modems to connect to the message network.

## Claims

1. A telecommunications network system in which the number used to route a call through the network includes means of identifying a call-related message passed over a separate unrelated message path.

2. A telecommunications system as claimed in Claim 1 including a Virtual Private Network (VPN), the VPN comprising a plurality of Private Branch Exchanges (PBX), each PBX having a connection to a public telephone network and to an Intelligent Network (I.N.) within the system wherein, when a VPN cell is initiated by a user connected to a PBX, the PBX sends a message via the I.N. to the destination PBX, also a connection is made between the PBX and the local exchange and a message is sent from the local exchange via the I.N. to a VPN Service Point, whereupon the Service Point establishes a connection, via the public telephone network, between the user local exchange and the destination PBX.

3. A telecommunications system as claimed in Claim 2, wherein a message is sent from the initiating PBX to the destination PBX via the I.N. message network, the message including a message identifier, the called extension number and a call-label to identify any subsequent messages sent via the message network relating to the call.

4. A system as claimed in Claim 3, wherein the number dialled by the initiating PBX to the local exchange comprises a VPN Service Code, a message identifier and the called extension number.

5. A system as claimed in Claim 4, wherein the local exchange sends a message via the I.N. Service Router to a VPN Service Point which message comprises the user's Calling Line Identity (CLI), the local exchange call reference, the VPN Service Request, the number dialled by the user and the message identifier received from the user's PBX.

6. A system as claimed in Claim 3, 4 or 5, wherein the connection between the VPN Service Point and the user local exchange is made using an I.N. override facility.
